# EUROPÄISCHE PATENTSCHRIFT

(11) **EP 4 255 786 B1**
(45) Veröffentlichungstag und Bekanntmachung des Hinweises auf die Patenterteilung: **23.07.2025**
(21) Anmeldenummer: 21824317.8
(22) Anmeldetag: 30.11.2021
(51) Int. Cl.: B60W 60/00

(54) **AUSWAHL VON FAHRMANÖVERN FÜR ZUMINDEST TEILWEISE AUTOMATISIERT FAHRENDE FAHRZEUGE**
SELECTION OF DRIVING MANEUVERS FOR AT LEAST SEMI-AUTONOMOUSLY DRIVING VEHICLES
SÉLECTION DE MANOEUVRES DE CONDUITE POUR DES VÉHICULES CIRCULANT AU MOINS EN PARTIE DE MANIÈRE AUTOMATISÉE

(30) Priorität: 03.12.2020 DE 102020215324
(43) Veröffentlichungstag der Anmeldung: 11.10.2023
(73) Patentinhaber: Robert Bosch GmbH, 70442 Stuttgart (DE)
(72) Erfinder: SCHMITT, Felix, 71640 Ludwigsburg (DE); STOLL, Martin, 71272 Renningen (DE); GOTH, Johannes, 72218 Wildberg (DE); BANZHAF, Holger Andreas, 89150 Laichingen (DE); DOELLINGER, Johannes Maximilian, 71229 Leonberg (DE); HANSELMANN, Michael, 70825 Korntal-Muenchingen (DE)
(86) Internationale Anmeldenummer: PCT/EP2021/083637
(87) Internationale Veröffentlichungsnummer: WO 2022/117586

(56) Entgegenhaltungen:
- US-A1- 2017 364 831
- GONZALEZ DAVID SIERRA ET AL: "Towards Human-Like Prediction and Decision-Making for Automated Vehicles in Highway Scenarios Towards Human-Like Prediction and Decision-Making for Automated Vehicles in Highway Scenarios", 16 July 2019 (2019-07-16), pages 1 - 190, XP055774970, Retrieved from the Internet <URL:https://tel.archives-ouvertes.fr/tel-02184362/document> [retrieved on 20210211]
- ZHOU XIN ET AL: "Centralized Patrolling With Weakly-Coupled Agents Using Monte Carlo Tree Search", IEEE ACCESS, vol. 7, 29 April 2019 (2019-04-29), pages 157293 - 157302, XP011754547, DOI: 10.1109/ACCESS.2019.2913764

## Beschreibung

Die vorliegende Erfindung betrifft die situationsabhängige Planung von Fahrmanövern für zumindest teilweise automatisiert fahrende Fahrzeuge.

### Stand der Technik

Ein zumindest teilweise automatisiert fahrendes Fahrzeug erfasst fortwährend die Situation, in der es sich befindet, um die Planung von Fahrmanövern für die nähere Zukunft Änderungen dieser Situation anzupassen. Änderungen der Situation, auf die das Fahrzeug reagieren muss, können beispielsweise dadurch bedingt sein, dass das Fahrzeug sich an einen anderen Ort mit anderen Gegebenheiten bewegt. Aber auch Bewegungen anderer Objekte, wie etwa anderer Verkehrsteilnehmer, können die Situation maßgeblich ändern und eine Reaktion erforderlich machen. Die DE 10 2018 210 280 A1 offenbart ein Verfahren, mit dem die Trajektorien von Fremdobjekten prognostiziert werden können, so dass die Trajektorie des eigenen Fahrzeugs entsprechend angepasst werden kann.

Einige Verfahren zur Planung von Fahrmanövern erstellen eine Repräsentation der Situation, in der sich das Fahrzeug befindet, und bilden diese Repräsentation mit einem trainierten Machine Learning-Modell auf eine Wahrscheinlichkeitsverteilung ab, die Wahrscheinlichkeiten für die prinzipiell zur Verfügung stehenden Fahrmanöver angibt. Aus dieser Wahrscheinlichkeitsverteilung wird ein Fahrmanöver als das durchzuführende Fahrmanöver gezogen, und die Aktorik des Fahrzeugs wird entsprechend angesteuert.

Aus der US 2017/364831 (A1) ist ein Verfahren und ein System zur Verwendung des maschinellen Lernens zum Erstellen eines vertrauenswürdigen Modells vorgestellt, welche den Betrieb einer Computersystemsteuerung verbessern. In einigen Ausführungsformen umfasst ein Maschinenlernverfahren das Trainieren eines Modells unter Verwendung von Eingabedaten, das Extrahieren des Modells und das Bestimmen, ob das Modell die vertrauensbezogenen Einschränkungen erfüllt. Wenn das Modell die vertrauensbezogene Einschränkung nicht erfüllt, wird mindestens eines von Folgendem modifiziert: das Modell unter Verwendung eines oder mehrerer Modellreparaturalgorithmen, die Eingabedaten unter Verwendung eines oder mehrerer Datenreparaturalgorithmen oder eine Belohnungsfunktion des Modells unter Verwendung eines oder mehrerer Belohnungsreparaturalgorithmen, und Neutrainieren des Modells unter Verwendung des modifizierten Modells, der modifizierten Eingabedaten und/oder der modifizierten Belohnungsfunktion. Wenn das Modell die vertrauensbezogenen Einschränkungen erfüllt, wird das Modell als vertrauenswürdiges Modell bereitgestellt, das es einer Computersystemsteuerung ermöglicht, Systemvorgänge innerhalb vorbestimmter Garantien durchzuführen.

Aus Gonzalez David Sierra ET AL, "Towards Human-Like Prediction and Decision-Making for Automated Vehicles in Highway Scenarios Towards Human-Like Prediction and Decision-Making for Automated Vehicles in Highway Scenarios", (20190716), pages 1 - 190, ist eine Pipeline von der Modellierung des Fahrerverhaltens und der Inferenz bis zur Entscheidungsfindung für die Navigation bekannt. Zunächst wird vorgeschlagen, das Verhalten eines generischen Fahrers automatisch anhand von Fahrdaten zu modellieren und so die traditionelle manuelle Anpassung der Modellparameter zu vermeiden. Dieses Modell kodiert die Präferenzen eines Fahrers in Bezug auf das Straßennetz (z.B. bevorzugte Fahrspur oder Geschwindigkeit) und auch in Bezug auf andere Verkehrsteilnehmer (z.B. bevorzugter Abstand zum führenden Fahrzeug). Ferner wird eine Methode beschrieben, die das gelernte Modell nutzt, um die wahrscheinlichste zukünftige Handlungssequenz eines Fahrers in einer Verkehrsszene bis in die ferne Zukunft vorherzusagen. Diese modellbasierte Vorhersagemethode geht davon aus, dass sich alle Verkehrsteilnehmer risikobewusst verhalten und daher gefährliche Manöver oder Unfälle nicht vorhersagen können.

### Offenbarung der Erfindung

Im Rahmen der Erfindung wurde ein Verfahren zur Auswahl eines von einem zumindest teilweise automatisierten Fahrzeug durchzuführenden Fahrmanövers entwickelt. Das Verfahren beginnt damit, dass unter Heranziehung von Messdaten mindestens eines von dem Fahrzeug mitgeführten Sensors eine Repräsentation der Situation, in der sich das Fahrzeug befindet, erstellt wird. Dieser Repräsentation der Situation wird durch ein trainiertes Machine Learning-Modell auf eine Wahrscheinlichkeitsverteilung abgebildet. Die Repräsentation kann insbesondere beispielsweise eine in beliebiger Form und Weise erstellte zusammenfassende Darstellung der Situation sein.

Die Messdaten können insbesondere beispielsweise Bilddaten, Videodaten, Radardaten, LIDAR-Daten und/oder Ultraschalldaten sein.

Unter einem Machine Learning-Modell wird insbesondere ein Modell angesehen, das eine mit anpassbaren Parametern parametrierte Funktion mit großer Kraft zur Verallgemeinerung verkörpert. Die Parameter können beim Training eines Machine Learning-Modells insbesondere dergestalt angepasst werden, dass bei Eingabe von Lern-Repräsentationen in das Modell die zu den Lern-Eingaben gehörigen, vorab bekannten Soll-Ausgaben möglichst gut reproduziert werden. Das Machine Learning-Modell kann insbesondere ein künstliches neuronales Netzwerk, KNN, beinhalten, und/oder es kann ein KNN sein.

Die Wahrscheinlichkeitsverteilung gibt für jedes Fahrmanöver aus einem vorgegebenen Katalog verfügbarer Fahrmanöver eine Wahrscheinlichkeit an, mit der dieses Fahrmanöver durchgeführt wird. Aus der Wahrscheinlichkeitsverteilung wird ein Fahrmanöver als das durchzuführende Fahrmanöver gezogen.

Zusätzlich wird unter Heranziehung mindestens eines Aspekts der Situation, in der sich das Fahrzeug befindet, eine Teilmenge von in dieser Situation unzulässigen Fahrmanövern ermittelt. Die Durchführung dieser unzulässigen Fahrmanöver wird unterdrückt.

Das Training des Machine Learning-Modells ist darauf gerichtet, die in der jeweiligen Situation sinnvolleren Fahrmanöver von den weniger sinnvollen Fahrmanövern zu trennen. Unzulässige Fahrmanöver werden daher schon zu einem großen Teil vom Machine Learning-Modell als weniger sinnvoll eingestuft. Das Ziehen des letztendlich durchzuführenden Fahrmanövers aus der Wahrscheinlichkeitsverteilung führt im Vergleich zu einer direkten Abbildung der Repräsentation auf genau ein Fahrmanöver durch das Machine Learning-Modell zu einem realistischeren und insbesondere für andere Verkehrsteilnehmer weniger überraschenden Fahrverhalten. Jedoch lässt es sich nicht vermeiden, dass auch unzulässige Fahrmanöver in der Wahrscheinlichkeitsverteilung mit einer von Null verschiedenen Wahrscheinlichkeit belegt werden. Das bedeutet, dass das unzulässige Fahrmanöver mit einer gewissen Wahrscheinlichkeit tatsächlich ausgewählt und ausgeführt wird. Diese Wahrscheinlichkeit kann größer sein als das für den automatisierten Fahrbetrieb spezifizierte akzeptable Restrisiko.

Weiterhin können Randbedingungen, die ein konkretes Fahrmanöver in einer bestimmten Situation unzulässig machen, vergleichsweise komplex und/oder so beschaffen sein, dass es unzweckmäßig ist, sie in das Training des Machine Learning-Modells einzubeziehen. Die Stärke des Machine Learning-Modells liegt gerade in der Kraft zur Verallgemeinerung von einer begrenzen Menge an Trainingssituationen auf eine unbestimmte Vielzahl von Situationen. Wenn jedoch beispielsweise fixe Auflagen für den automatisierten Fahrbetrieb vorschreiben, dass bestimmte Fahrmanöver nur in bestimmten Geschwindigkeitsbereichen durchzuführen sind oder ein Überholmanöver nur bei einem vorgeschriebenen Mindestabstand zum herannahenden Gegenverkehr eingeleitet werden darf, ist die besagte Kraft zur Verallgemeinerung nicht das optimale Instrument. Stattdessen ist es vorteilhafter, derartige Randbedingungen ohne Umweg über das Machine Learning-Modell durchzusetzen.

Das Unterdrücken unzulässiger Fahrmanöver kann also insbesondere vollkommen unabhängig vom Machine Learning-Modell erfolgen. Das bedeutet, dass das Machine Learning-Modell zunächst losgelöst von der Zulässigkeit einzelner Fahrmanöver, die erst im Nachhinein durchgesetzt wird, trainiert werden kann. Somit wirken sich auch nachträgliche Änderungen der Vorgaben in Bezug auf die Zulässigkeit nicht mehr auf das Training des Machine Learning-Modells aus. Derartige Änderungen können also vielfach umgesetzt werden, ohne dass das Training ganz oder teilweise wiederholt werden muss. Eine Anpassung des Trainings erfordert in der Regel das Absolvieren von Testfahrten, auf denen Repräsentationen bestimmter neuer Situationen aufgenommen werden. Diese Repräsentationen müssen anschließend manuell mit den in den jeweiligen Situationen erwünschten Fahrmanövern gelabelt werden.

Dieser Aufwand ist nicht notwendig, um beispielsweise den Geschwindigkeitsbereich, in dem ein Fahrmanöver zulässig ist, anzupassen. Auch Neuregelungen wie die Freigabe des Standstreifens als Fahrspur auf besonders stark belasteten Autobahnabschnitten lassen sich vereinfacht umsetzen, indem der Spurwechsel auf den Standstreifen, der im Normalfall als unzulässig abgelehnt wird, bei entsprechender Freigabe für zulässig erklärt wird.

Erfindungsgemäß wird die Durchführung mindestens eines unzulässigen Fahrmanövers unterdrückt, indem in der Wahrscheinlichkeitsverteilung die Wahrscheinlichkeit, dass dieses Fahrmanöver durchgeführt wird, auf Null gesetzt wird. Hiermit wird eine geänderte Wahrscheinlichkeitsverteilung erzeugt. Auf diese Weise ist sichergestellt, dass beim Ziehen aus der Wahrscheinlichkeitsverteilung nur ein zulässiges Fahrmanöver ausgewählt werden kann und zugleich das Ziehen nicht ganz ohne brauchbares Ergebnis bleibt. Es ist also keine gesonderte "Fehlerbehandlung" für den Fall notwendig, dass ein unzulässiges Fahrmanöver gezogen wird.

Insbesondere kann beispielsweise die Wahrscheinlichkeitsverteilung nach dem Nullsetzen mindestens einer Wahrscheinlichkeit so normiert werden, dass sich die noch von Null verschiedenen Wahrscheinlichkeiten für Fahrmanöver auf 1 summieren. Auch hiermit wird eine geänderte Wahrscheinlichkeitsverteilung erzeugt. Ein als unzulässig verworfenes Fahrmanöver gibt also seine bisherige Wahrscheinlichkeit, ausgewählt zu werden, ab und verteilt sie anteilig auf die als zulässig verbliebenen Fahrmanöver. Dies ist ein Stück weit analog dazu, dass das Scheitern eines von mehreren Bewerbern um eine Wohnung oder Arbeitsstelle an einem No-Go-Kriterium dessen bisherige Chancen auf die verbliebenen Bewerber umverteilt: Das Scheitern des einen Bewerbers ändert nichts daran, dass mit Sicherheit (Wahrscheinlichkeit 1) die Wohnung bzw. Stelle an wen auch immer vergeben werden wird.

In Kombination zu einer nachträglichen Abänderung der Wahrscheinlichkeitsverteilung kann die Durchführung mindestens eines unzulässigen Fahrmanövers unterdrückt werden, indem in Antwort darauf, dass dieses Fahrmanöver aus der Wahrscheinlichkeitsverteilung gezogen wurde, ein neues Fahrmanöver aus der Wahrscheinlichkeitsverteilung gezogen wird. Da die Wahrscheinlichkeitsverteilung den zulässigen Fahrmanövern höhere Wahrscheinlichkeiten zuordnet, ist es zu erwarten, aber nicht garantiert, dass beim erneuten Ziehen ein zulässiges Fahrmanöver ausgewählt wird. Gegebenenfalls muss das erneute Ziehen wiederholt werden, bis ein zulässiges Fahrmanöver als Ergebnis erhalten wird.

Der Vorteil des wiederholten Ziehens liegt darin, dass Situationen, in denen zunächst ein unzulässiges Fahrmanöver ausgewählt wurde, erfasst und ausgewertet werden können. Wenn sich derartige Situationen häufen, kann dies ein Indikator dafür sein, dass das Machine Learning-Modell die Situation nicht mehr zutreffend erfasst und sein Training entsprechend anzupassen ist. Eine mögliche Ursache hierfür kann in der Einführung neuer Regeln für den Straßenverkehr nach dem Training des Machine Learning-Modells liegen.

Beispielsweise wurde das neu eingeführte Verkehrszeichen für Umweltzonen dem Verkehrszeichen, das den Beginn einer Tempo 30-Zone ankündigt, weitestgehend nachempfunden. Es wurde lediglich die Zahl "30" innerhalb des roten Kreises durch das Wort "Umwelt" ersetzt. Der bei menschlichen Fahrern durchaus erwünschte Wiedererkennungswert kann zum Problem werden, wenn das Machine Learning-Modell nur das Schild "Tempo 30-Zone" kennt. Führt etwa eine Schnellstraße, auf der 80 km/h erlaubt sind, in eine Umweltzone, kann das Machine Learning-Modell eine Geschwindigkeitsbeschränkung auf 30 km/h erkennen und eine entsprechend abrupte Bremsung als sinnvollstes Fahrmanöver empfehlen. Wenn eine so abrupte Bremsung die für den automatisierten Fahrbetrieb zugelassene Maximalverzögerung überschreitet, wird die Bremsung als unzulässig verworfen und nicht ausgeführt. Wird nun erfasst, dass im Fahrbetrieb immer wieder das gleiche Fahrmanöver am gleichen Ort als unzulässig verworfen wurde, erhält der Fahrzeugnutzer eine Rückmeldung, dass etwas Grundsätzliches nicht in Ordnung ist und das Machine Learning-Modell ein Update benötigt.

In einer weiteren besonders vorteilhaften Ausgestaltung wird mindestens ein unzulässiges Fahrmanöver anhand von Informationen ermittelt, die anhand der aktuellen Position des Fahrzeugs aus einer digitalen ortsaufgelösten Karte abgerufen werden. Auf der digitalen Karte können insbesondere beispielsweise der Straßenverlauf, die Anzahl der vorhandenen Fahrspuren je Fahrtrichtung, Geschwindigkeitsbeschränkungen, Überholverbote und andere Verkehrsregeln verzeichnet sein. Wenn sich beispielsweise herausstellt, dass links bzw. rechts neben der aktuellen Fahrspur laut Karte keine weitere Fahrspur oder überhaupt kein befahrbarer Bereich angrenzt, kann ein Spurwechsel nach links bzw. rechts als unzulässig gewertet werden.

Ein unzulässiges Fahrmanöver kann also insbesondere beispielsweise ein Fahrmanöver sein, das ein Risiko für
- das Verlassen der Fahrbahn, und/oder
- eine Verletzung allgemeiner Verkehrsregeln, und/oder
- eine Verletzung spezieller Auflagen für den automatisierten Fahrbetrieb, und/oder
- eine Kollision des eigenen Fahrzeugs mit einem fremden Fahrzeug oder sonstigen Objekt,
darstellt.

Somit können die unzulässigen Fahrmanöver insbesondere beispielsweise
- einen Spurwechsel, der zum Verlassen der Fahrbahn führt, und/oder
- einen Spurwechsel auf eine aktuell nicht erreichbare Fahrspur, und/oder
- ein durch Verkehrsregeln verbotenes Beschleunigungs- und/oder Überholmanöver, und/oder
- das Hinterherfahren hinter einem fremden Fahrzeug, das sich aktuell hinter dem eigenen Fahrzeug befindet,
umfassen.

Wie zuvor erläutert, kann das Herausfiltern unzulässiger Fahrmanöver unabhängig vom Machine Learning-Modell erfolgen, das zunächst einmal völlige Freiheit besitzt, jedes prinzipiell zur Verfügung stehende Fahrmanöver vorzuschlagen. Das Wissen, welche Fahrmanöver unzulässig sind, lässt sich jedoch flankierend hierzu auch in das Training des Machine Learning-Modells einbringen.

Das Machine Learning-Modell bildet eine Repräsentation einer Situation, in der sich ein Fahrzeug befindet, auf eine Wahrscheinlichkeitsverteilung ab, die für jedes Fahrmanöver aus einem vorgegebenen Katalog verfügbarer Fahrmanöver eine Wahrscheinlichkeit angibt, mit der dieses Fahrmanöver durchgeführt wird.

Im Rahmen eines Verfahrens zum Trainieren des Machine Learning Modells werden Lern-Repräsentationen von Situationen und zugehörige Soll-Wahrscheinlichkeitsverteilungen, auf die das Machine Learning-Modell diese Lern-Repräsentationen abbilden soll, bereitgestellt. Die Lern-Repräsentationen werden dem Machine Learning-Modell zugeführt und von dem Machine Learning-Modell auf Wahrscheinlichkeitsverteilungen abgebildet. Die Übereinstimmung dieser Wahrscheinlichkeitsverteilungen mit den jeweiligen Soll-Wahrscheinlichkeitsverteilungen wird anhand einer vorgegebenen Kostenfunktion bewertet. Parameter, die das Verhalten des Machine Learning-Modells charakterisieren, werden optimiert mit dem Ziel, dass die weitere Verarbeitung von Lern-Repräsentationen zu einer besseren Bewertung durch die Kostenfunktion führt.

Für mindestens ein in der durch die Lern-Repräsentation charakterisierten Situation unzulässiges Fahrmanöver wird hierbei die Möglichkeit, dass eine Erhöhung der diesem Fahrmanöver zugeordneten Wahrscheinlichkeit zu einer besseren Bewertung durch die Kostenfunktion führt, unterdrückt.

Das bedeutet, dass sich das Machine Learning-Modell in Bezug auf die Bewertung durch die Kostenfunktion keinen Vorteil verschaffen kann, indem es ein unzulässiges Fahrmanöver vorschlägt. Um im Hinblick auf diese Bewertung besser zu werden, muss das Machine Learning-Modell somit in Betracht ziehen, die Wahrscheinlichkeiten für andere Fahrmanöver zu erhöhen. Dies schließt nicht aus, dass unzulässigen Fahrmanövern in der Wahrscheinlichkeitsverteilung noch eine von Null verschiedene Wahrscheinlichkeit zugeordnet wird. Es ist jedoch deutlich bevorzugt, dass nur die Wahrscheinlichkeiten für zulässige Fahrmanöver erhöht werden.

In einer vorteilhaften Ausgestaltung wird die Kostenfunktion um einen Strafterm erweitert, der einen Vorteil, den eine Erhöhung der dem unzulässigen Fahrmanöver zugeordneten Wahrscheinlichkeit in Bezug auf die ursprüngliche Kostenfunktion erzielen würde, abschöpft und/oder überkompensiert. Analog dem Strafrecht, das mit seinen Strafandrohungen auch sehr schwere Verbrechen nicht gänzlich verhindern kann, ist dann nicht ausgeschlossen, dass unzulässigen Fahrmanövern nach wie vor von Null verschiedene Wahrscheinlichkeiten zugeordnet werden. Jedoch wird ein starker Anreiz geschaffen, stattdessen nur die Wahrscheinlichkeiten für zulässige Fahrmanöver zu erhöhen.

Alternativ oder auch in Kombination hierzu kann eine vom Machine Learning-Modell gelieferte, dem unzulässigen Fahrmanöver zugeordnete Wahrscheinlichkeit vor der Bewertung durch die Kostenfunktion auf Null gesetzt werden. Eine Erhöhung dieser Wahrscheinlichkeit wird hierdurch nicht explizit bestraft, sondern bewirkt bei der Optimierung nichts mehr. Im Verlauf des Trainings wird das Machine Learning-Modell lernen, dass Änderungen an den Wahrscheinlichkeiten für unzulässige Fahrmanöver keinen Effekt mehr bei der Optimierung der Kostenfunktion haben. Entsprechende Versuche werden dann aufgegeben zugunsten einer Optimierung der Wahrscheinlichkeiten für zulässige Fahrmanöver. Dieses Vorgehen ist ein Stück weit vergleichbar mit einem "Time-Out-Stuhl", auf dem ein Kind, das durch Temperamentsausbrüche Aufmerksamkeit erzwingen will, durch Vorenthalten ebendieser Aufmerksamkeit zur Räson gebracht werden soll.

In einer weiteren vorteilhaften Ausgestaltung wird die Wahrscheinlichkeitsverteilung regularisiert und/oder diskretisiert, so dass Wahrscheinlichkeiten, die unterhalb eines vorgegebenen Schwellwerts liegen, auf Null gedrückt werden.

Damit könnte eine Garantie dafür gegeben werden, dass das Ziehen aus der Wahrscheinlichkeitsverteilung kein unzulässiges Fahrmanöver hervorbringt. Beispielsweise kann hierzu eine L1-Norm verwendet werden.

Die Verfahren können insbesondere beispielsweise auf einem oder mehreren Computern implementiert sein und insofern in einer Software verkörpert sein. Die Erfindung bezieht sich daher auch Computerprogramm, enthaltend maschinenlesbare Anweisungen, die, wenn sie auf einem oder mehreren Computern ausgeführt werden, den oder die Computer dazu veranlassen, eines der beschriebenen Verfahren auszuführen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Die Erfindung bezieht sich auch auf einen Computer, der mit dem Datenträger ausgerüstet ist.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zur Auswahl eines Fahrmanövers 4;
Figur 2 Ausführungsbeispiel des Verfahrens 200 zum Trainieren eines Machine Learning-Modells 1.

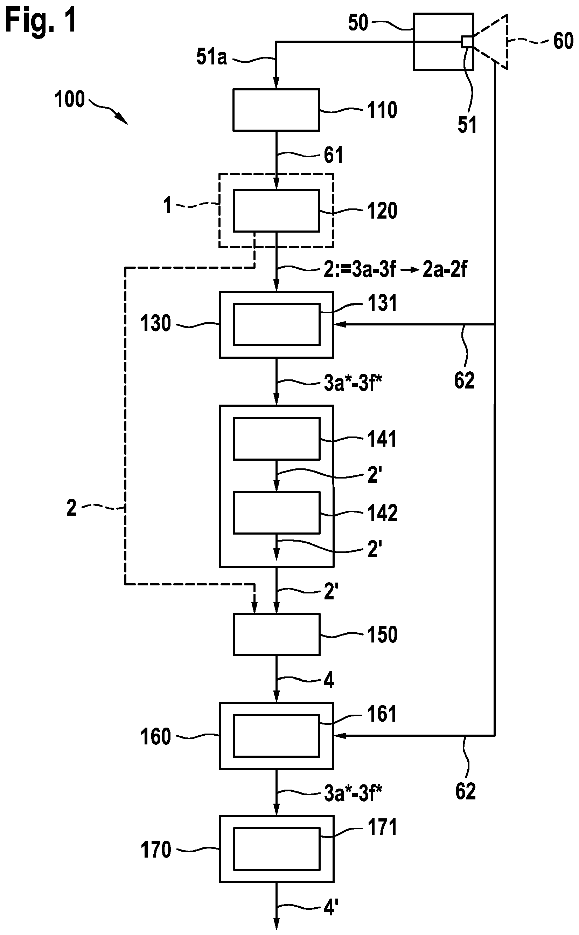

Figur 1 ist ein schematisches Ablaufdiagramm eines Ausführungsbeispiels des Verfahrens 100. Ziel des Verfahrens 100 ist es, ein durchzuführendes und der aktuellen Situation 60 des Fahrzeugs 50 angemessenes Fahrmanöver 4 aus einem vorgegebenen Katalog von Fahrmanövern 3a-3f auszuwählen.

Zu diesem Zweck wird in Schritt 110 unter Heranziehung von Messdaten 51a mindestens eines von dem Fahrzeug mitgeführten Sensors 51 eine Repräsentation 61 der Situation 60, in der sich das Fahrzeug 50 befindet, erstellt. Diese Repräsentation 61 der Situation 60 wird in Schritt 120 durch ein trainiertes Machine Learning-Modell 1 auf eine Wahrscheinlichkeitsverteilung 2 abgebildet. Die Wahrscheinlichkeitsverteilung 2 gibt für jedes Fahrmanöver 3a-3f aus dem vorgegebenen Katalog verfügbarer Fahrmanöver 3a-3) eine Wahrscheinlichkeit 2a-2f an, mit der dieses Fahrmanöver 3a-3f durchgeführt wird.

Bereits an dieser Stelle kann in Schritt 130 unter Heranziehung mindestens eines Aspekts 62 der Situation 60 eine Teilmenge von in dieser Situation 60 unzulässigen Fahrmanövern 3a*-3f* ermittelt werden. Anschießend kann in Schritt 140 die Durchführung dieser unzulässigen Fahrmanöver 3a*-3f* unterdrückt werden. Hierzu wird gemäß Block 141 in der Wahrscheinlichkeitsverteilung 2 die Wahrscheinlichkeit 2a-2f, dass das unzulässige Fahrmanöver 3a*-3f* durchgeführt wird, auf Null gesetzt.

Nach diesem Nullsetzen kann gemäß Block 142 die Wahrscheinlichkeitsverteilung so normiert werden, dass sich die noch von Null verschiedenen Wahrscheinlichkeiten 2a-2f für Fahrmanöver 3a-3f auf 1 summieren. Es entsteht dann eine geänderte Wahrscheinlichkeitsverteilung 2'.

In Schritt 150 wird aus dieser geänderten Wahrscheinlichkeitsverteilung 2', bzw. aus der ursprünglichen Wahrscheinlichkeitsverteilung 2, ein Fahrmanöver 3a-3f als das durchzuführende Fahrmanöver 4 gezogen.

Auch an dieser Stelle kann eingegriffen werden, um unzulässige Fahrmanöver 3a*-3f* herauszufiltern. Hierzu können in Schritt 160, analog zu Schritt 130, die unzulässigen Fahrmanöver 3a*-3f* unter Heranziehung des mindestens einen Aspekts 62 der Situation 60 ermittelt werden. Anschließend können diese unzulässigen Fahrmanöver 3a*-3f* in Schritt 170 unterdrückt werden. Hierzu kann insbesondere beispielsweise in Antwort darauf, dass ein unzulässiges Fahrmanöver 3a*-3f* aus der Wahrscheinlichkeitsverteilung 2 gezogen wurde, ein neues Fahrmanöver 3a-3f aus der Wahrscheinlichkeitsverteilung 2 gezogen werden. Somit steht am Ende nicht mehr das ursprünglich gezogene Fahrmanöver 4, sondern das neu gezogene Fahrmanöver 4'.

Die unzulässigen Fahrmanöver 3a*-3f* können insbesondere beispielsweise gemäß Block 131 bzw. 161 jeweils anhand von Informationen ermittelt werden, die anhand der aktuellen Position des Fahrzeugs 50 aus einer digitalen ortsaufgelösten Karte abgerufen werden.

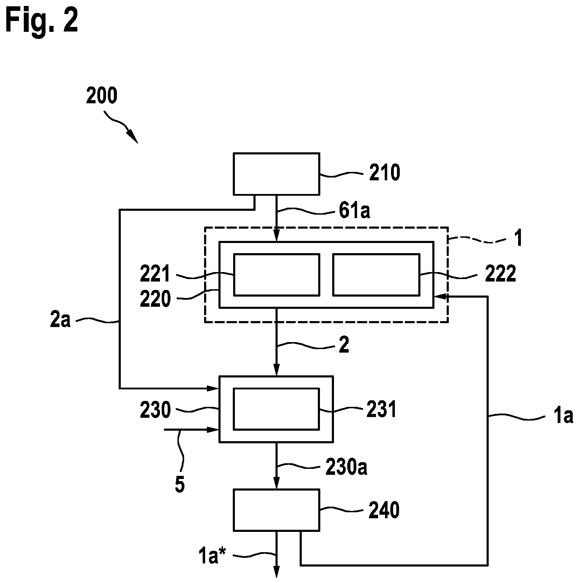

Figur 2 ist ein schematisches Ablaufdiagramm eines Ausführungsbeispiels des Verfahrens 200 zum Trainieren des Machine Learning-Modells 1. Das Machine Learning-Modell 1 bildet eine Repräsentation 61 einer Situation 60, in der sich ein Fahrzeug 50 befindet, auf eine Wahrscheinlichkeitsverteilung 2 ab. Diese Wahrscheinlichkeitsverteilung 2 gibt für jedes Fahrmanöver 3a-3f aus einem vorgegebenen Katalog verfügbarer Fahrmanöver 3a-3f eine Wahrscheinlichkeit 2a-2f an, mit der dieses Fahrmanöver 3a-3f durchgeführt wird.

In Schritt 210 werden Lern-Repräsentationen 61a von Situationen 60 und zugehörige Soll-Wahrscheinlichkeitsverteilungen 2a, auf die das Machine Learning-Modell 1 diese Lern-Repräsentationen 61a abbilden soll, bereitgestellt. In Schritt 220 werden die Lern-Repräsentationen 61a dem Machine Learning-Modell 1 zugeführt und von dem Machine Learning-Modell 1 auf Wahrscheinlichkeitsverteilungen 2 abgebildet. In Schritt 230 wird die Übereinstimmung dieser Wahrscheinlichkeitsverteilungen 2 mit den jeweiligen Soll-Wahrscheinlichkeitsverteilungen 2a anhand einer vorgegebenen Kostenfunktion 5 bewertet. In Schritt 240 werden Parameter 1a, die das Verhalten des Machine Learning-Modells (1) charakterisieren, optimiert. Diese Optimierung hat zum Ziel, dass die weitere Verarbeitung von Lern-Repräsentationen 61a zu einer besseren Bewertung 230a durch die Kostenfunktion 5 führt. Der fertig trainierte Zustand der Parameter 1a ist mit dem Bezugszeichen 1a* bezeichnet.

Dabei wird für mindestens ein in der durch die Lern-Repräsentation 61a charakterisierten Situation 60 unzulässiges Fahrmanöver 3a*-3f'* die Möglichkeit, dass eine Erhöhung der diesem Fahrmanöver 3a*-3f* zugeordneten Wahrscheinlichkeit 2a-2f zu einer besseren Bewertung 230a durch die Kostenfunktion 5 führt, unterdrückt. Figur 2 zeigt exemplarisch zwei Wege, auf denen dies bewerkstelligt werden kann.

Beispielsweise kann gemäß Block 231 die Kostenfunktion 5 um einen Strafterm erweitert werden, der einen Vorteil, den eine Erhöhung der dem unzulässigen Fahrmanöver 3a*-3f* zugeordneten Wahrscheinlichkeit 2a-2f in Bezug auf die ursprüngliche Kostenfunktion 5 erzielen würde, abschöpft und/oder überkompensiert.

Alternativ oder auch in Kombination hierzu kann gemäß Block 221 eine vom Machine Learning-Modell 1 gelieferte, dem unzulässigen Fahrmanöver 3a*-3f* zugeordnete Wahrscheinlichkeit 2a-2f vor der Bewertung durch die Kostenfunktion 5 auf Null gesetzt werden.

Weiterhin kann gemäß Block 222 die Wahrscheinlichkeitsverteilung 2 regularisiert und/oder diskretisiert werden, so dass Wahrscheinlichkeiten 2a-2f, die unterhalb eines vorgegebenen Schwellwerts liegen, auf Null gedrückt werden.

## Patentansprüche

1. Verfahren (100) zur Auswahl eines von einem zumindest teilweise automatisiert fahrenden Fahrzeug (50) durchzuführenden Fahrmanövers (4) mit den Schritten:
• unter Heranziehung von Messdaten (51a) mindestens eines von dem Fahrzeug mitgeführten Sensors (51) wird eine Repräsentation (61) der Situation (60), in der sich das Fahrzeug (50) befindet, erstellt (110);
• die Repräsentation (61) der Situation (60) wird durch ein trainiertes Machine Learning-Modell (1) auf eine Wahrscheinlichkeitsverteilung (2) abgebildet (120), die für jedes Fahrmanöver (3a-3f) aus einem vorgegebenen Katalog verfügbarer Fahrmanöver (3a-3f) eine Wahrscheinlichkeit (2a-2f) angibt, mit der dieses Fahrmanöver (3a-3f) durchgeführt wird;
• aus der Wahrscheinlichkeitsverteilung (2, 2') wird ein Fahrmanöver (3a-3f) als das durchzuführende Fahrmanöver (4) gezogen (150);
• wobei zusätzlich unter Heranziehung mindestens eines Aspekts (62) der Situation (60), in der sich das Fahrzeug (50) befindet, eine Teilmenge von in dieser Situation (60) unzulässigen Fahrmanövern (3a*-3f*) ermittelt wird (130, 160), und
• wobei die Durchführung dieser unzulässigen Fahrmanöver (3a*-3f*) unterdrückt wird (140, 170),
**dadurch gekennzeichnet,**
**dass** die Durchführung unterdrückt wird, indem in der Wahrscheinlichkeitsverteilung (2) die Wahrscheinlichkeit (2a-2f), dass dieses Fahrmanöver (3a*-3f*) durchgeführt wird, auf Null gesetzt wird (141), so dass eine geänderte Wahrscheinlichkeitsverteilung (2') erzeugt wird.

2. Verfahren (100) nach Anspruch 1, wobei die Wahrscheinlichkeitsverteilung (2) nach dem Nullsetzen mindestens einer Wahrscheinlichkeit (2a-2f) so normiert wird (142), dass sich die noch von Null verschiedenen Wahrscheinlichkeiten (2a-2f) für Fahrmanöver (3a-3f) auf 1 summieren, so dass eine geänderte Wahrscheinlichkeitsverteilung (2') erzeugt wird.

3. Verfahren (100) nach einem der Ansprüche 1 bis 2, wobei die Durchführung mindestens eines unzulässigen Fahrmanövers (3a*-3f*) unterdrückt wird, indem in Antwort darauf, dass dieses Fahrmanöver (3a*-3f*) aus der Wahrscheinlichkeitsverteilung (2) gezogen wurde, ein neues Fahrmanöver (3a-3f) aus der Wahrscheinlichkeitsverteilung (2) gezogen wird (171).

4. Verfahren (100) nach einem der Ansprüche 1 bis 3, wobei mindestens ein unzulässiges Fahrmanöver (3a*-3f*) anhand von Informationen ermittelt wird (131, 161), die anhand der aktuellen Position des Fahrzeugs (50) aus einer digitalen ortsaufgelösten Karte abgerufen werden.

5. Verfahren (100) nach einem der Ansprüche 1 bis 4, wobei mindestens ein unzulässiges Fahrmanöver (3a*-3f*) ein Fahrmanöver ist, das ein Risiko für
• das Verlassen der Fahrbahn, und/oder
• eine Verletzung allgemeiner Verkehrsregeln, und/oder
• eine Verletzung spezieller Auflagen für den automatisierten Fahrbetrieb, und/oder
• eine Kollision des eigenen Fahrzeugs (50) mit einem fremden Fahrzeug oder sonstigen Objekt,
darstellt.

6. Verfahren (100) nach einem der Ansprüche 1 bis 5, wobei die unzulässigen Fahrmanöver (3a*-3f*)
• einen Spurwechsel, der zum Verlassen der Fahrbahn führt, und/oder
• einen Spurwechsel auf eine aktuell nicht erreichbare Fahrspur, und/oder
• ein durch Verkehrsregeln verbotenes Beschleunigungs- und/oder Überholmanöver, und/oder
• das Hinterherfahren hinter einem fremden Fahrzeug, das sich aktuell hinter dem eigenen Fahrzeug (50) befindet,
umfassen.

7. Computerprogramm, enthaltend maschinenlesbare Anweisungen, die, wenn sie auf einem oder mehreren Computern ausgeführt werden, den oder die Computer dazu veranlassen, ein Verfahren (100, 200) nach einem der Ansprüche 1 bis 6 auszuführen.

8. Maschinenlesbarer Datenträger und/oder Downloadprodukt mit dem Computerprogramm nach Anspruch 7.

9. Computer mit dem maschinenlesbaren Datenträger nach Anspruch 8.

## Claims

1. Method (100) for selecting a driving manoeuvre (4) to be carried out by a vehicle (50) driving in an at least partially automated manner, comprising the following steps:
• a representation (61) of the situation (60) in which the vehicle (50) is located is created (110) using measurement data (51a) from at least one sensor (51) carried by the vehicle;
• the representation (61) of the situation (60) is mapped (120) by a trained machine learning model (1) to a probability distribution (2) which indicates, for each driving manoeuvre (3a-3f) from a predefined catalogue of available driving manoeuvres (3a-3f), a probability (2a-2f) with which this driving manoeuvre (3a-3f) is carried out;
• a driving manoeuvre (3a-3f) is drawn (150) from the probability distribution (2, 2') as the driving manoeuvre (4) to be carried out;
• wherein, using at least one aspect (62) of the situation (60) in which the vehicle (50) is located, a subset of driving manoeuvres (3a*-3f*) that are impermissible in this situation (60) is additionally determined (130, 160), and
• wherein the performance of these impermissible driving manoeuvres (3a*-3f*) is suppressed (140, 170),
**characterized**
**in that** the performance is suppressed by setting (141) the probability (2a-2f) of this driving manoeuvre (3a*-3f*) being carried out to zero in the probability distribution (2), such that a changed probability distribution (2') is generated.

2. Method (100) according to Claim 1, wherein the probability distribution (2) is normalized (142) after setting at least one probability (2a-2f) to zero such that the probabilities (2a-2f) for driving manoeuvres (3a-3f), which are still different from zero, add up to 1, such that a changed probability distribution (2') is generated.

3. Method (100) according to one of Claims 1 to 2, wherein the performance of at least one impermissible driving manoeuvre (3a*-3f*) is suppressed by drawing (171) a new driving manoeuvre (3a-3f) from the probability distribution (2) in response to this driving manoeuvre (3a*-3f*) having been drawn from the probability distribution (2).

4. Method (100) according to one of Claims 1 to 3, wherein at least one impermissible driving manoeuvre (3a*-3f*) is determined (131, 161) on the basis of information which is retrieved from a digital spatially resolved map on the basis of the current position of the vehicle (50).

5. Method (100) according to one of Claims 1 to 4, wherein at least one impermissible driving manoeuvre (3a*-3f*) is a driving manoeuvre which is a risk of
• leaving the road, and/or
• infringing general traffic rules, and/or
• infringing special requirements for automated driving, and/or
• a collision between the ego vehicle (50) and a third-party vehicle or other object.

6. Method (100) according to one of Claims 1 to 5, wherein the impermissible driving manoeuvres (3a*-3f*) comprise
• a lane change which results in the road being left, and/or
• a lane change to a currently unreachable lane, and/or
• an acceleration and/or overtaking manoeuvre prohibited by traffic rules, and/or
• driving behind a third-party vehicle currently behind the ego vehicle (50).

7. Computer program containing machine-readable instructions that, when executed on one or more computers, cause the computer or the computers to carry out a method (100, 200) according to one of Claims 1 to 6.

8. Machine-readable data carrier and/or download product having the computer program according to Claim 7.

9. Computer comprising the machine-readable data carrier according to Claim 8.

## Revendications

1. Procédé (100) pour sélectionner une manœuvre de conduite (4) à effectuer par un véhicule (50) roulant au moins partiellement de manière automatisée, comprenant les étapes :
• en utilisant des données de mesure (51a) d'au moins un capteur (51) emporté par le véhicule, une représentation (61) de la situation (60) dans laquelle se trouve le véhicule (50) est créée (110) ;
• la représentation (61) de la situation (60) est représentée (120) sur une distribution de probabilités (2) à l'aide d'un modèle d'apprentissage automatique (1) entraîné, qui indique, pour chaque manœuvre de conduite (3a-3f) issue d'un catalogue prédéfini de manœuvres de conduite (3a-3f) disponibles, une probabilité (2a-2f) que cette manœuvre de conduite (3a-3f) soit effectuée ;
• une manœuvre de conduite (3a-3f) est extraite (150) en tant que manœuvre de conduite à effectuer (4) à partir de la distribution de probabilités (2, 2') ;
• un sous-ensemble de manœuvres de conduite non autorisées (3a*-3f*) dans la situation (60) dans laquelle se trouve le véhicule (50) étant en outre déterminé (130, 160) en utilisant au moins un aspect (62) de cette situation (60), et
• la réalisation de ces manœuvres de conduite non autorisées (3a*-3f*) étant inhibée (140, 170),
**caractérisé en ce que**
la réalisation est inhibée en fixant à zéro (141), dans la distribution de probabilités (2), la probabilité (2a-2f) selon laquelle cette manœuvre de conduite (3a*-3f*) soit exécutée, de sorte qu'une distribution de probabilités modifiée (2') est générée.

2. Procédé (100) selon la revendication 1, la distribution de probabilités (2) étant normalisée (142) après la mise à zéro d'au moins une probabilité (2a-2f) de telle sorte que les probabilités (2a-2f) qui sont encore différentes de zéro pour les manœuvres de conduite (3a-3f) s'additionnent pour donner 1, de sorte qu'une distribution de probabilités modifiée (2') est générée.

3. Procédé (100) selon l'une des revendications 1 à 2, la réalisation d'au moins une manœuvre de conduite non autorisée (3a*-3f*) étant inhibée en extrayant (171) une nouvelle manœuvre de conduite (3a-3f) de la distribution de probabilités (2) en réponse au fait que cette manœuvre de conduite (3a*-3f*) avait été extraite de la distribution de probabilités (2).

4. Procédé (100) selon l'une des revendications 1 à 3, au moins une manœuvre de conduite non autorisée (3a*-3f*) étant déterminée (131, 161) à l'aide d'informations qui sont consultées à partir d'une carte numérique à résolution spatiale à l'aide de la position actuelle du véhicule (50).

5. Procédé (100) selon l'une des revendications 1 à 4, au moins une manœuvre de conduite non autorisée (3a*-3f*) étant une manœuvre de conduite qui présente un risque de
• sortie de la chaussée, et/ou
• violation des règles générales de circulation, et/ou
• violation des conditions particulières applicables à la conduite automatisée, et/ou
• collision du propre véhicule (50) avec un autre véhicule ou un autre objet.

6. Procédé (100) selon l'une des revendications 1 à 5, les manœuvres de conduite non autorisées (3a*-3f*) comprenant
• un changement de voie qui entraîne une sortie de la chaussée, et/ou
• un changement de voie vers une voie de circulation actuellement inaccessible, et/ou
• une manœuvre d'accélération et/ou de dépassement interdite par les règles de circulation, et/ou
• le fait de suivre un véhicule étranger qui se trouve actuellement derrière le propre véhicule (50).

7. Programme informatique comprenant des instructions lisibles par machine qui, lorsqu'elles sont exécutées sur un ou plusieurs ordinateurs, amènent l'ordinateur ou les ordinateurs à mettre en œuvre un procédé (100, 200) selon l'une des revendications 1 à 6.

8. Support de données lisible par machine et/ou produit à télécharger comprenant le programme informatique selon la revendication 7.

9. Ordinateur comprenant le support de données lisible par machine selon la revendication 8.
